# EUROPEAN PATENT APPLICATION

(11) **EP 3 819 529 A1**
(43) Date of publication of application: **12.05.2021**
(21) Application number: 20199657.6
(22) Date of filing: 01.10.2020
(51) Int. Cl.: F16L 43/00, E03C 1/02, E03C 1/042, F16L 5/12, F16L 55/035

(54) **QUICK INSTALLING FITTING DEVICE FOR A WALL-HIDDEN HYDRAULIC PIPELINE**

(30) Priority: 08.11.2019 IT 201900020660
(71) Applicant: Tapel di Mastromatteo Ciro & C. S.a.s, 36043 Camisano Vicentino (IT)
(72) Inventor: Mastromatteo, Ciro, 36043 Camisano Vicentino (IT)
(74) Representative: Autuori, Angelo

(57) **Abstract**

A device for the fitting of a pipe (**1**), for example a multilayer pipe, of a wall-mounted hydraulic system and a second water pipe (**2**), for example a flexible pipe, comprising a curved tubular element (**10)** which can be fitted to the first and second pipe (**1, 2**),a closed sound-absorbing box (40) made of polymeric material flush-mountable in the wall or fixable to the latter, and a cap (**30**) which can be inserted into the tubular element (**10**), so as to allow the testing of the hydraulic system. The tubular element (**10**) comprises at least one portion (**12**) inserted into the box (**40**), and a first and second end (**11'; 11"**) protruding from the latter so as to allow, upon removing said cap (**30**), the fitting respectively with the first and the second pipe (**1, 2**). The box (**40**) comprises interlocking means (**402**) for constraining the latter and the tubular element (**10**), without using screws, bolts, glues and the like.

## Description

### Field of the invention

The present invention generally relates to the technical field of the technical field of fittings, and it particularly relates to a fitting device for a wall-mounted hydraulic system which is quick to install.

### State of the Art

Various types of fittings for wall-mounted hydraulic systems are known.

For example, curved fittings **F** which can be coupled to the domestic hydraulic system pipe and to the flexible pipe of the washbasin, by using terminals, adapters and ring nuts so as to allow mutual coupling are known.

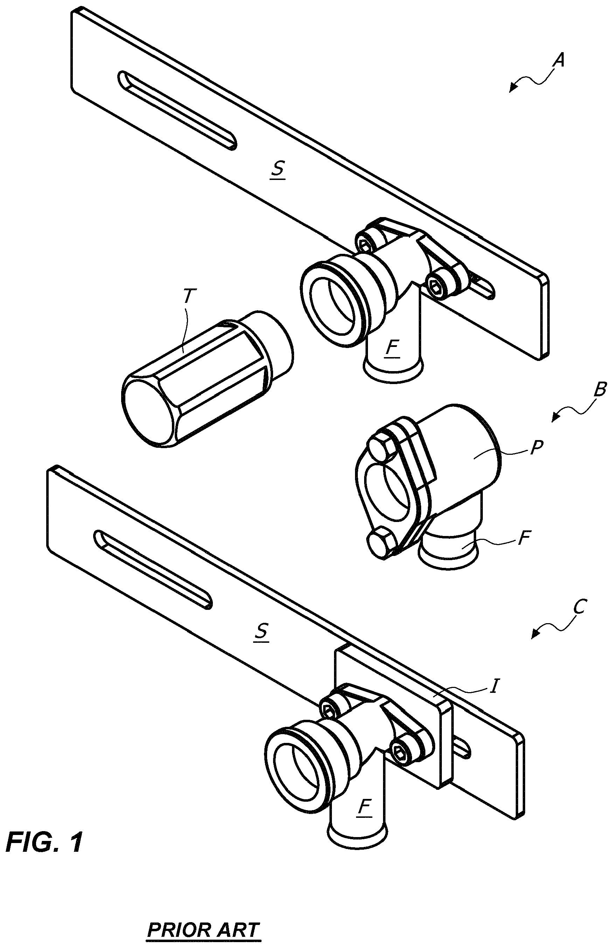

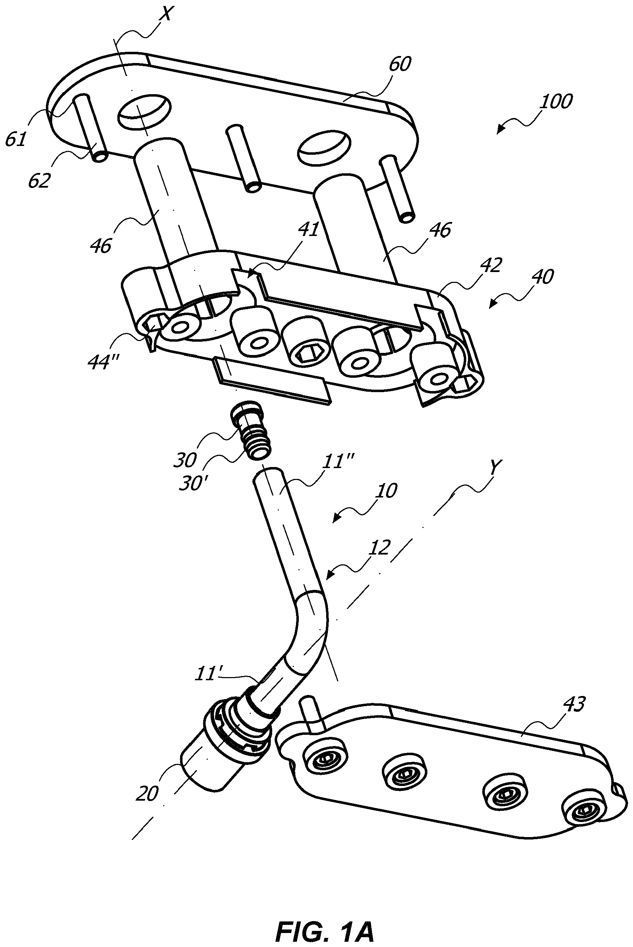

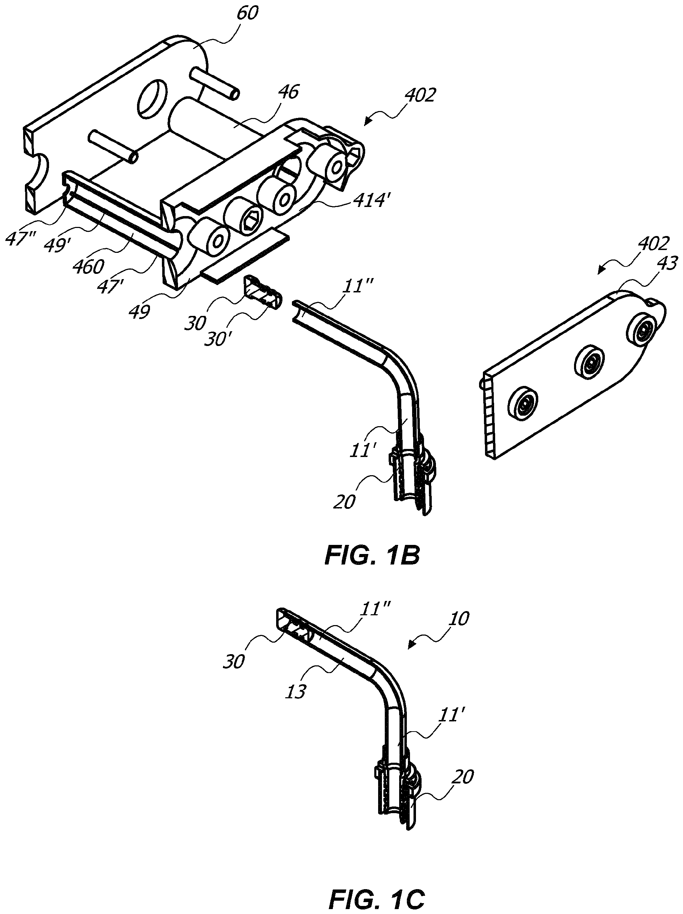

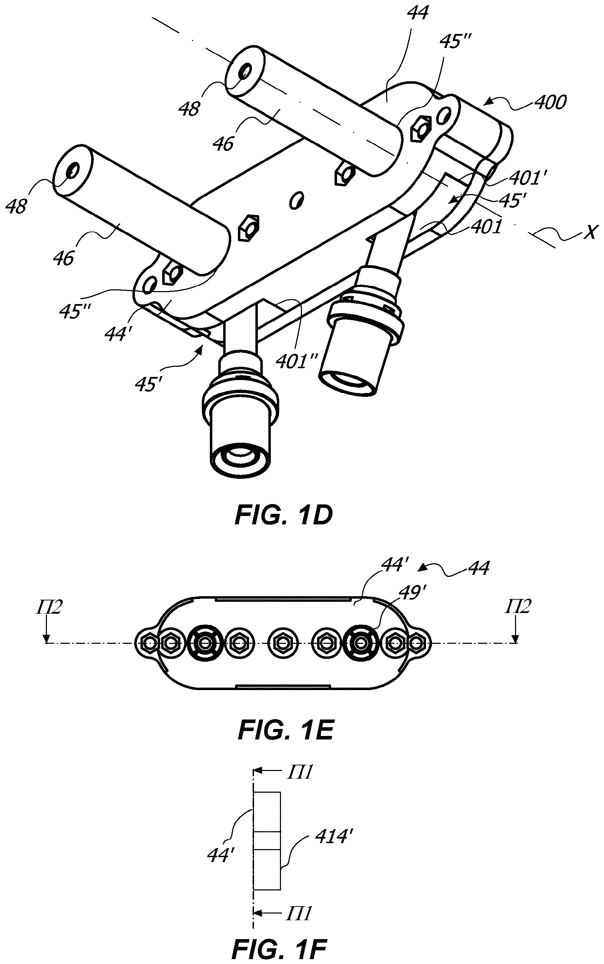

Various devices, illustrated in FIG. 1, used to reduce any noises caused by the through-flow of water in the pipes are known.

In a solution of the prior art, indicated with **B,** such curved fittings **F** can be inserted into dedicated plastic boxes **P** in order to reduce any noises caused by the through-flow of water in the pipes.

The plastic box **P** and the curved fitting **F** are typically coupled by means of screws, with ensuing possible deterioration of the plastic material upon coupling the fitting with the flexible pipe, due to the torsion imparted to the fitting.

Furthermore, a further known solution **A** provides for the use of a metal bracket **S** which can be coupled by means of one or more flanges to the curved fitting inserted into the plastic box.

This allows to prevent the possible torsions caused by the screwing of the flexible pipe to the fitting itself.

Furthermore, a further known solution **C** provides for the use of a plastic plate **I** interposed between the bracket and the metal fitting to reduce the vibrations when water flows through the pipes.

Lastly, there arises the need for a further component so as to enable to test the system, i.e. a cap **T** positioned at the end of the fitting suitable for coupling with a flexible pipe, so as to prevent the outflow of water.

As known, such known solutions provide for a plurality of components, as well as a considerable difficulty of installation by a technician.

### Summary of the invention

An object of the present invention is to at least partly overcome the drawbacks outlined above by providing a fitting device that is highly functional and relatively cost-effective.

Another object of the invention is to provide a fitting device that is easy to use for any operator in the industry, even if not particularly specialised.

Another object of the invention is to provide a fitting device with a low number of components.

Another object of the present invention is to provide a fitting device that is quick to install.

These and other objects that will be more apparent hereinafter, are achieved by a fitting device having one or more of the characteristics described and/or claimed and/or illustrated herein.

Advantageous embodiments of the invention are defined according to the dependent claims.

### Brief description of the drawings

Further characteristics and advantages of the invention will be more apparent in light of the detailed description of some preferred but non-exclusive embodiments of the invention, illustrated by way of non-limiting example with reference to the attached drawings, wherein:
**FIG. 1** is a set of axonometric views of some devices **A, B** and **C** according to the state of the art;
**FIG. 1A** is an axonometric view of the device **100** according to a first embodiment, regarding which **FIG. 1B** is an axial sectional view taken along a plane passing through the axis **X;**
**FIG. 1C** is an axial sectional view of the pipe 10 with a smooth surface;
**FIG. 1D** is an axonometric view of the device **100** according to embodiment of **FIG. 1A****;**
**FIG. 1E** is a front view of the bottom wall **44** of the embodiment of **FIG. 1A**, regarding which **FIG. 1F** is a lateral view;
**FIGS. 2A** and **2B** are axonometric views, respectively, of a device **100** flush-mounted in a wall and fixed to a plasterboard wall;
**FIG. 3A** is an axonometric view of the device **100** according to a further embodiment, regarding which **FIG. 3B** is an axial sectional view taken along a plane passing through the axis **X;**
**FIG. 3C** is an axonometric view of the device **100** according to embodiment of **FIG. 3A**;
**FIG. 4** is an axonometric view of a device **100** according to the embodiment of **FIG. 3A** flush-mounted in a wall.

### Detailed description of some preferred embodiments

With reference to the aforementioned figures, herein described is a device **100** for fitting a pipe 1, for example a multilayer pipe or an exposed portion thereof of a wall-mounted hydraulic system, and a second pipe **2,** for example a flexible pipe for the through-flow of water from the hydraulic system to a faucet.

The present invention can include various parts and/or similar or identical elements. Unless otherwise specified, similar or identical parts and/or elements will be indicated using a single reference number, it being clear that the described technical features are common to all similar or identical parts and/or elements.

The device **100** may comprise a tubular element 10 with a smooth surface, a sound-absorbing box **40** into which the tubular element **10** is inserted axially and a cap **30** inserted into the tubular element **10** with a smooth surface.

Preferably, the tubular element **10** with a smooth surface, hereinafter referred to as pipe **10,** may be curved and made of metal material, preferably copper.

However, it is clear that the pipe **10** may be made of polymeric material, for example plastic, without departing from the scope of protection of the attached claims.

Preferably, the pipe **10** may comprise a smooth inner surface **13** so as to keep the pressure of the water flowing through it constant and prevent the generation of noises.

The pipe **10** may comprise an end **11'** which can be connected to the pipe **1** and an opposite end **11"** which can be connected to the pipe **2,** upon axially removing the cap **30.**

In particular, the ends **11'** and **11"** may be substantially orthogonal to each other.

Furthermore, the pipe **10** and the pipe **1** may be connected by means of a fitting **20** positioned at the end **11'.**

The fitting **20** may for example be of the press-fitting type, known in the state of the art, in order to optimise the time used for fitting the pipe **10** and the pipe **1.**

Furthermore, the pipe **10** and the pipe **2** may be connected by means of a fitting of any type known in the state of the art and positioned at the end **11".**

Preferably, a fitting of the type described in international application PCT/IB2018/060451, in which the torsion force on the pipe caused by the screwing of the ring nut is minimised by interposing the coupling terminal between them, may be provided for.

Suitably, the cap **30,** for example a cap with external sealing elements **30',** may be axially inserted into the end **11"** of the pipe **10** so as to prevent the outflow of water therefrom when testing the hydraulic system, as known.

Preferably, the box **40** may comprise a container body **42** comprising a bottom wall **44** which may have one or more through openings **45",** as particularly illustrated in **FIG. 1D****,** from which the end **11"** may protrude.

The container body **42** may further comprise a side wall **400** comprising an opening **45'** from which the end **11'** may protrude.

Furthermore, the container body **42** may be coupled to a cover **43** so as to internally define a housing area **41.**

Furthermore, the bottom wall **44** may define a plane **π1.** Such wall **44** may comprise an outer surface **44'** and an inner surface **414'** opposite and facing the cover **43.**

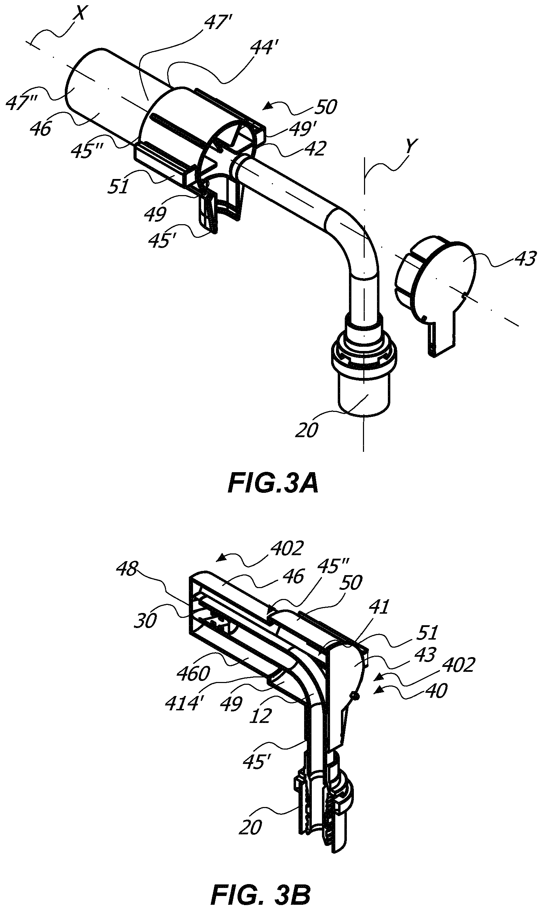

Suitably, the bottom wall **44** and the cover **43** may define interlocking means **402** for constraining the pipe **10** in the box **40,** given that the pipe **10** remains interposed between the wall **44** and the cover **43,** as particularly clear in **FIG. 3B****.**

This may allow to prevent the pipe **10** from sliding along an axis **X** perpendicular to the plane **π1.**

Furthermore, the box **40** may be flush-mounted in the wall or a fixing flange **60** which can be coupled to the outer surface **44'** to connect the box **40** to a plasterboard wall may be provided for.

In particular, the container body **42** may include coupling elements **44",** for example a pair of holes, while the fixing flange may include coupling elements **61,** for example a pair of through holes.

The pair of holes **44"** and the pair of through holes **61** may for example be connected by means of a pair of screws **62,** as shown in particular in **FIG. 1A****.**

Furthermore, the bottom wall **44** may comprise one or more cylindrical elements **46** defining an axis parallel to or coinciding with the axis **X.**

In particular, the cylindrical element **46** may be substantially closed to contain the end **11"** of the pipe **10** so as to promote the keeping of the cap **30** in place when testing the hydraulic system.

The cylindrical element **46** may comprise an end **47'** consecutive and integrally coupled to the opening **45"** and an opposite end **47"** which includes a hole **48** for inspecting the presence of the cap **30** at the end **11".**

Once the test has been carried out, the element **46** may be removed, for example it may be cut flushed with the wall, so as to allow the axial removal of the cap **30** from the end **11"** and the fitting of the latter with the pipe **2.**

It is clear that the end **47'** of the element **46** may be coupled to the opening **45"** by means of removable coupling elements, for example a hook system or the like, without departing from the scope of protection of the attached claims.

Preferably, the sound-absorbing box **40** can be made of polymeric material, for example plastic, so as to reduce the possible noises caused by water when flowing through the pipe **10,** typically due to a pressure shock.

In particular, the housing area **41** may comprise an inner surface **49** including means **49'** for locking the pipe **10.**

Furthermore, the cylindrical element **46** may comprise an inner surface **460** comprising the same or different locking means **49'** so as to allow the locking of the end **11"** in the cylindrical element **46** when installing.

Such locking means **49'** may for example be laminar protrusions which come into contact with the portion of pipe **10** inserted into the box **40,** so as to prevent the sliding of the pipe **10** along an axis **Y** perpendicular to the axis **X.**

Furthermore, the protrusions **49'** may centre the pipe **10** in the box **40** and dampen the vibrations generated by the water flowing through it when in use.

According to a preferred but non-exclusive embodiment, the protrusions **49'** may be made of flexible polymeric material so as to allow movement of the end **11"** of the pipe **10** along a plane **π2** parallel to the axis **X** and perpendicular to the plane **π1.**

In this manner, a movement of the end **11"** of the order of 1-5 mm, will allow a more precise fitting with the pipe **2,** given that the centre-to-centre distance, i.e. the distance between the axis passing through the end **11",** coincident with or parallel to the axis **X,** and the axis of the pipe **2,** can be modulated.

According to a preferred but non-exclusive embodiment, particularly illustrated in **FIG. 1D**, the opening **45'** may be defined by a slot **401** which may extend parallel to the plane **π1.**

The slot **401** may comprise two end-stop surfaces **401'** and **401"** on which the end **11'** of the pipe **10** protruding from the slot **401** may impact.

In particular, the end **11'** may oscillate around the axis **X** so as to facilitate the fitting with the pipe **1** when installing, irrespective of the inclination it takes on the wall.

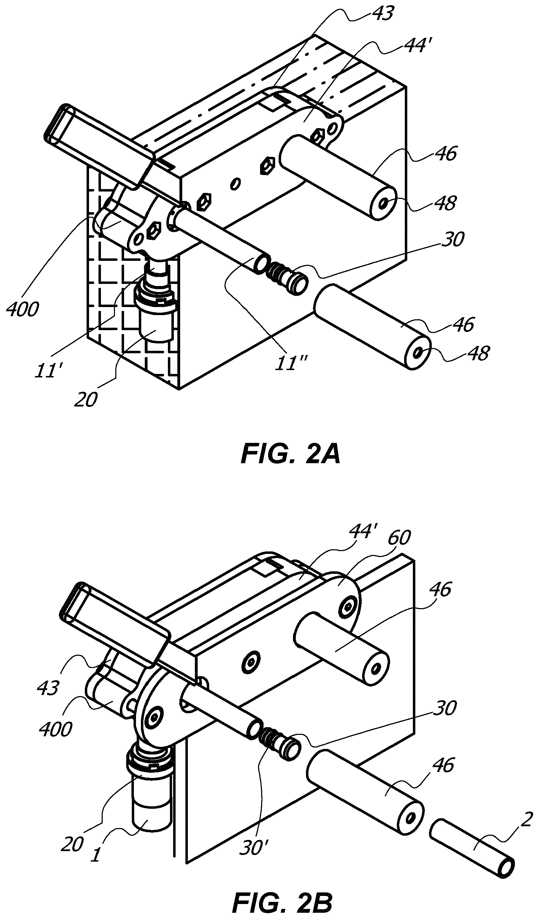

According to a preferred but not exclusive example, illustrated in **FIGS. 1A-2B****,** the device **100** may comprise a pair of pipes **10** inserted into the box **40** which may therefore comprise a pair of through openings **45'** and **45",** as well as a pair of cylindrical elements **46.**

This will allow an easy installation of a pair of pipes **10,** which can be fitted to a pair of pipes **1,** for example designed for delivering hot water and cold water, and a pair of dispensing pipes **2.**

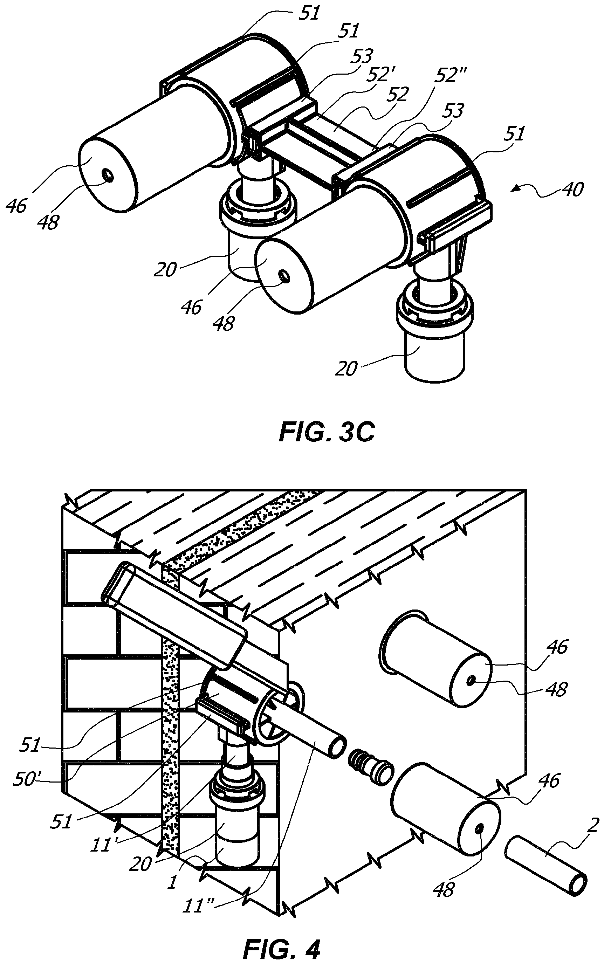

According to a further embodiment, particularly illustrated in **FIGS. 3C** and **4**, the container body **42** may comprise a pair of cylindrical containers **50** connected by means of a bracket **52,** each comprising the through openings **45'** and **45",** as well as a cylindrical element **46.**

Likewise, a pipe **10** may be inserted into each container **50** so as to fit a pair of pipes **10,** to a pair of pipes **1,** for example designed for delivering hot water and cold water, and a pair of dispensing pipes **2.**

Preferably, the ends **11'** and **11"** will be integrally joined with the respective container **50,** i.e. they will move integrally joined therewith.

In particular, the opening **45'** may be fitted on the end **11'** so as to block the motion thereof therein, while the end **11"** may be locked by the locking means **49'** as described above.

Each cylindrical container **50** may define an axis parallel to or coincident with the axis **X.**

Furthermore, each container **50** may comprise an outer surface **50'** having two or more coupling elements **51,** for example a plurality of connection elements of the male type male extending along the surface **50'** parallel to the axis **X.**

Likewise, the bracket **52** may comprise two opposite coupling portions **52'** and **52"** each comprising a coupling element **53,** for example connection portions of the female type counter-shaped to be coupled with the elements of the male type provided on the outer surface **50'** so as to allow the connection of the cylindrical containers **50** according to a plurality of inclinations on the wall.

In particular, each container **50** may rotate around an axis parallel to or coincident with the axis **X** so as to direct each end **11'** of each pipe **10** on the wall for an optimal fitting with the pipes **1** of the hydraulic system.

From an operative point of view, it will be possible to install the device **100** at a wall-mounted hydraulic system, fit the end **11'** and the pipe **1,** test the system, remove the cylindrical elements **46,** axially remove the cap **30** from the end **11"** and fit the latter to the pipe **2.**

It is therefore clear that the fitting device according to the invention will have few components and it will be quick to install.

In light of the above, it is clear that the invention attains the pre-set objectives.

The invention is susceptible to numerous modifications and variants all falling within the inventive concept outlined in the attached claims. Furthermore, all details can be replaced by other technically equivalent elements, and the materials can be different depending on the needs, without departing from the scope of protection defined by the attached claims.

## Claims

1. A device for the fitting of at least one first pipe **(1),** for example a multilayer pipe, of a wall-mounted hydraulic system and at least one second water pipe **(2),** for example a flexible pipe, comprising:
- at least one tubular element **(10)** with a substantially curved smooth surface, the same being preferably made of metal and comprising a first end **(11')** which can be fitted to said at least one first pipe **(1)** and a second opposite end **(11")** which can be fitted to said at least one second pipe **(2);**
- a substantially closed sound-absorbing box **(40)** made of polymeric material and comprising at least one housing area **(41),** the box **(40)** being flush-mountable in the wall or fixable to the latter;
- a cap **(30)** removably inserted into said at least one second end **(11")** of said at least one tubular element **(10)** with a smooth surface so as to allow testing of the hydraulic system;
wherein said at least one tubular element **(10)** with a smooth surface comprises at least one portion **(12)** inserted into said housing area **(41)** of said box **(40),** said first and second ends **(11'; 11")** protruding from the latter so as to allow the fitting respectively with said at least one first and one second pipe **(1, 2),** once upon removing said cap **(30);**
wherein said box **(40)** comprises interlocking means **(402)** for constraining the latter and said at least one tubular element **(10)** with a smooth surface, without using screws, bolts, glues and the like.

2. Device according to claim 1, wherein said box **(40)** comprises a container body **(42)** and a cover **(43)** mutually coupled to internally define said housing area **(41),** said container body **(42)** comprising a side wall **(400)** comprising at least one first through opening **(45')** from which said first end **(11')** of said at least one curved tubular element **(10)** with a smooth surface protrudes, said container body **(42)** further comprising a bottom wall **(44)** defining a first plane **(π1)** and comprising at least one second through opening **(45")** for the protrusion of said second end **(11")** of said at least one curved tubular element **(10).**

3. Device according to claim 2, wherein said interlocking means **(402)** comprise said bottom wall **(44)** and said cover **(43)** to prevent the sliding of said at least one tubular element **(10)** along a first axis **(X)** substantially perpendicular to said first plane **(π1).**

4. Device according to claim 2 or 3, wherein said bottom wall **(44)** comprises at least one removable cylindrical element **(46)** defining an axis parallel to or coinciding with said first axis **(X)** and comprising opposite third and fourth ends **(47', 47"),** said third end **(47')** being substantially coupled with said at least one second through opening **(45")** so as to allow the insertion of said second end **(11")** of said at least one curved tubular element **(10)** with a smooth surface into said at least one cylindrical element **(46),** said fourth end **(47")** comprising an inspection hole **(48)** for monitoring the presence of said cap **(30)** in said second end **(11")** of said at least one curved tubular element (10) when testing the hydraulic system.

5. Device according to claim 4, wherein said housing area **(41)** of said box **(40)** comprises a first inner surface **(49),** said at least one cylindrical element **(46)** comprising a second inner surface **(460)** consecutive to said first inner surface **(49),** said first and/or second inner surface **(49; 460)** including locking means **(49')** comprising a plurality of protrusions susceptible to come into mutual contact with said at least one curved tubular element **(10)** with a smooth surface to prevent the sliding thereof along a second axis (Y) perpendicular to said first axis **(X),** said locking means **(49')** further being susceptible to centre said at least one curved tubular element **(10)** with a smooth surface and dampen the vibrations generated by the water flowing through it when in use.

6. Device according to the preceding claim, wherein said locking means **(49')** comprise a plurality of laminar elements extending along said first inner surface **(49)** and/or said second inner surface **(460)** of said at least one cylindrical element **(46)** parallel to said first axis **(X).**

7. Device according to any one of claims 2 to 6 when depending on 2, wherein said at least one first opening **(45')** is defined by a slot **(401)** extending substantially parallel to said first plane **(π1)** and comprising a first and a second end-stop surface **(401', 401"),** said first end **(11')** of said at least one curved tubular element **(10)** with a smooth surface protruding from the at least one slot **(401)** and being susceptible to move with respect to said box **(40)** rotating around said first axis **(X)** or an axis parallel thereto between said first and second end-stop surface **(401', 401")** so as to facilitate the connection of said first end **(11')** and said at least one first pipe **(1)** of the hydraulic system, when installing.

8. Device according to any one of claims 2 to 7 when depending on 2, comprising at least one pair of curved tubular elements **(10)** with a smooth surface, each curved tubular element **(10)** comprising said opposite first and second ends **(11', 11"),** said box **(40)** comprising one pair of first and second through openings **(45'; 45")** and a pair of cylindrical elements **(46)** for the insertion of said second ends **(11")** of each of said curved tubular elements **(10)** in the cylindrical elements **(46).**

9. Device according to any one of claims 2 to 6 when depending on 2, wherein said container body **(42)** of said box **(40)** comprises a pair of cylindrical containers **(50)** each comprising a first outer surface **(50')** including a plurality of first coupling elements **(51),** said container body **(42)** further comprising a bracket **(52)** comprising opposite first and a second coupling portions **(52', 52")** each comprising at least one second coupling element **(53)** so as to allow the mutual coupling with at least one element of said plurality of first coupling elements **(51),** so as to allow the mutual connection of the cylindrical containers of said pair of cylindrical containers **(50)** according to a plurality of inclinations on the wall, so as to assist the mutual connection of said first end (11') of each of said curved tubular elements **(10)** with a smooth surface and a pair of first pipes (1).

10. Device according to any one of the preceding claims when depending on 5, wherein said locking means **(49')** are made of flexible polymeric material in a manner such that, so as to allow - upon removing said cylindrical element **(46)** - the movement of said second end **(11")** of said at least one curved tubular element **(10)** with a smooth surface along a second plane **(π2)** parallel to said first axis **(X)** and perpendicular to said first plane **(π1)** so as to assist the fitting with said at least one second pipe (2).
